(19) **Europäisches Patentamt**

**European Patent Office**

**Office européen des brevets**

(11) **EP 1 219 933 B1**

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(51) Int Cl.:
**G01D 5/22** (2006.01)

(21) Anmeldenummer: **01130917.6**

(22) Anmeldetag: **27.12.2001**

(54) **Differential-Wirbelstromgeber**

Differential eddy current sensor

Sonde à courant de Foucault différentielle

(84) Benannte Vertragsstaaten:
**DE FR IT**

(30) Priorität: **28.12.2000 RU 2000132816**

(43) Veröffentlichungstag der Anmeldung:
**03.07.2002 Patentblatt 2002/27**

(73) Patentinhaber: **MICRO EPSILON MESSTECHNIK GMBH & CO. KG**
**94496 Ortenburg (DE)**

(72) Erfinder:
• **Mednikov, Felix Matveevich**
**443082 Samara (RU)**
• **Mednikov, Stanislav Felixovich**
**443096 Samara (RU)**
• **Nechaevsky, Mark Lazarevich**
**443110 Samara (RU)**

(74) Vertreter: **Finck, Dieter et al**
**v. Füner Ebbinghaus Finck Hano**
**Postfach 95 01 60**
**81517 München (DE)**

(56) Entgegenhaltungen:
DE-A- 3 817 371      DE-A- 3 825 975
DE-A- 4 033 252      DE-A- 19 610 844

• **FINNIE M: "DIGITALE MESSWERTE AUS INDUKTIVEN WEGAUFNEHMERN" ELEKTRONIK, FRANZIS VERLAG GMBH. MUNCHEN, DE, Bd. 40, Nr. 26, 23. Dezember 1991 (1991-12-23), Seiten 58-62, XP000270529 ISSN: 0013-5658**

**Beschreibung**

Die vorliegende Erfindung bezieht sich auf das Gebiet der Meßtechnik, insbesondere betrifft sie einen Differential-Wirbelstromgeber.

Die Erfindung kann im Maschinenbau zur zerstörungsfreien Kontrolle von elektrisch leitenden und/oder ferromagnetischen Materialien und Werkstücken, nämlich zur Messung des Abstandes zu einer Oberfläche, der Dicke von Blechtafeln und Überzügen, der Werkstückmaße, bei der Steuerung von technologischen Prozessen, in der Defektoskopie und auf anderen Gebieten angewendet werden.

Zur Zeit ist eine Vielzahl von Konstruktionen der Differential-Wirbelstromgeber bekannt (DE4033252, DE3825975), die in verschiedenen Geräten und Meßsystemen weitgehend verwendet werden.

Für die meisten bekannten Wirbelstromgeber ist bezeichnend, daß in den Meßergebnissen ein durch den Einfluß äußerer Faktoren bedingter Fehler, ein sogenannter Zusatzfehler, vorhanden ist. Viele von den Vervollkommnungen der bekannten Wirbelstromgeber zielen gerade auf die Erhöhung der Meßgenauigket durch Minimierung des Zusatzfehlers ab, jedoch ist dieses Problem bis jetzt nicht endgültig gelöst.

Es ist ein induktiver Differentialgeber zur Messung mechanischer (nichtelektrischer) Größen bekannt (DE 3817371 A1), der zwei Spulen enthält, in deren Innerem ein mit einem Kontrollobjekt gekoppelter ferromagnetischer Kern verschiebbar angeordnet ist. Je nach der Lage des Kerns ändern sich die Induktivitäten der Spulen, deren gemeinsame Herausführung an einen der Eingänge eines LC-Generators angeschlossen ist und zwei andere Herausführungen über einen Analog-Multiplexer abwechselnd an den zweiten Eingang des LC-Generators gelegt werden. Die Schwingungsfrequenz des selbsterregten Röhrengenerators hängt von dem Induktivitätswert im LC-Kreis ab, d.h. davon, welche von den Spulen im jeweiligen Moment an seinen Eingang angeschlossen ist. Die Ausgangssignalfrequenz des LC-Generators wird nach der Anschaltung jeder der zwei Spulen bestimmt, wonach ein Mikrocomputer nach der Frequenzdifferenz den Wert der vom Geber gemessenen Größe berechnet.

Für diese Schaltung sind charakteristisch eine niedrige Schnellwirkung, die Notwendigkeit des Einsatzes vielstelliger Zähler bei der Bestimmung der Frequenz, weil ihre Deviation relativ klein ist, ein begrenztes Auflösungsvermögen sowie eine hinreichend hohe Kompliziertheit und entsprechend hohe Kosten der apparativen Realisierung.

Bekannt ist ein Wirbelstrom-Meßsystem (US, A, 5.541.510) zur zerstörungsfreien Kontrolle von elektrisch leitenden und/oder ferromagnetischen Materialien und Werkstücken, das einen ein Impedanz-Netzwerk (Impedance Network) speisenden Generator, einen Amplituden- und einen Phasendetektor, Demodulatoren, eine Recheneinheit und einen Wirbelstromgeber mit einer Meßspule, der einen Resonanzkreis mit einem parallelgeschalteten Kondensator bildet, enthält. Das bekannte Meßsystem erlaubt es, zwei auf ein Kontrollobjekt bezogene Parameter zu messen. In Wirklichkeit ist aber die Zahl von Parametern, die den Wirbelstromgeber gleichzeitig beeinflussen, mehr als zwei.

Beispielsweise erweist sich bei der Messung des Abstandes zu einem Objekt und eines linearen Maßes (der Dicke) desselben die wahrscheinliche Änderung zumindest zweier von drei anderen Parametern als unkompensiert: der Leitfähigkeit, der magnetischen Permeabilität und der Temperatur sowie möglicherweise auch der übrigen Parameter des Objektes (darunter der Linearabmessungen).

Der Einfluß der genannten Faktoren auf die Meßergebnisse wird teilweise in einer Variante des Systems mit zwei differentialgeschalteten Wirbelstromgebern beseitigt. Jedoch stellt eine solche Variante erhöhte Anforderungen an die Ausführung der Wirbelstromgeber, welche gleiche Abmessungen und elektrische Daten aufweisen sollen, was wegen der technologischen Kennlinienstreuung schwer sicherzustellen ist.

Außerdem ist es erforderlich, die beiden Wirbelstromgeber sehr genau zu positionieren, damit sie sich in einer gleichen Stellung bezüglich des Kontrollobjektes und/oder unter gleichen Umgebungsbedingungen befinden.

Die Nichtidentität der Wirbelstromgeber und ihrer Anordnung führt zu einer unvollständigen Kompensation der Änderung der unkontrollierbaren Faktoren und dementsprechend zu Fehlern in den Meßergebnissen.

Überdies ist es zur Verarbeitung von durch die Wirbelstromgeber erzeugten Signalen erforderlich, einen kostspieligen Instrumentenverstärker zu verwenden. Die genannten Besonderheiten des Systems erhöhen dessen Kompliziertheit und dessen Kosten.

Zum Einschalten von Wirbelstrom- und induktiven Gebern werden Brückenschaltungen weitgehend eingesetzt, in denen einer der Brückenzweige von einer Sinusspannungsquelle gespeist wird und der andere an die Eingänge eines Differentialverstärkers gelegt ist, nach welchem die Wechselspannung einer phasenempfindlichen Demodulation und einer Filterung unterzogen wird.

Charakteristisch für derartige Schaltungen sind: komplizierte Abgleichung, gewisse Nichtlinearität der unabgeglichenen Brücke, Zeitvariabilität und Temperaturinstabilität, Einfluß elektromagnetischer Störungen, wobei für den Schutz gegen die letzteren beispielsweise ein kostspieliges Koaxialkabel verwendet wird.

Der beanspruchten Vorrichtung kommt ein Differential-Wirbelstromgeber am nächsten, der im Prospekt der Firma Kaman Instrumentation (USA) "The Measuring Solution Handbook", 1999, S. 6 (siehe auch SS. 4 und 5) beschrieben und ebenfalls in Brückenschaltung ausgeführt ist.

Der bekannte Wirbelstromgeber enthält einen Primärumformer mit zwei gleichen Meßspulen und einen elektronischen Block, der zwei kapazitive Elemente und zwei Wirkwiderstandselemente umfaßt. Jede Meßspule ist durch ein kapazitives Element geshuntet, mit dem sie einen Parallelresonanzkreis bildet. Diese beiden Kreise sind in die Nachbarzweige der Brücke geschaltet, deren zwei andere Zweige die Wirkwiderstandselemente bilden. Der gemeinsame Punkt der Wicklungen ist geerdet, während dem gemeinsamen Punkt der Wirkwiderstandselemente Wechselspannung zugeführt wird. Das Ausgangssignal der Schaltung wird von den gemeinsamen Punkten der Widerstände und Spulen abgegriffen.

Die Kompensation der Temperaturinstabilität ist nur bei der abgeglichenen Brücke, d.h. nur bei einer fixierten Lage des Kontrollobjektes und einer unveränderlichen Größe seiner elektromagnetischen Parameter (der elektrischen Leitfähigkeit, der magnetischen Permeabilität) möglich.

Die unvollständige Identität der Parameter der Meßspulen und die vorhandene Streuung der Parameter der Schaltungselemente des Gebers erschweren die Auswahl der kapazitiven Elemente für die Resonanzkreise und der Wirkwiderstanselemente zum Abgleich der Brückenzweige. Dabei ist die vollständige Abgleichung praktisch unmöglich, weil die Brückenzweige durch ungleichartige Elemente gebildet sind. Selbst im Falle, daß die Brücke nach der Amplitude abgeglichen ist, ist eine Phasenverschiebung zu verzeichnen, welche bei der phasenempfindlichen Demodulation zum Nullpunktfehler, zur Verminderung des Auflösungsvermögens und Entstehung einer Temperaturinstabilität des Ausgangssignals führt.

Eine Störung des Brückenabgleichs findet während der Messungen bei einem unsymmetrischen Einfluß des Kontrollobjektes auf die Meßspulen statt, was sich auf die Genauigkeit der Meßergebnisse ebenfalls negativ auswirkt.

Außerdem ist für die weitere Umformung des Meßsignals ein Differentialverstärker (Instrumentenverstärker) erforderlich, was die Meßapparatur im ganzen kompliziert macht und ihre Kosten erhöht.

Der Erfindung liegt die Aufgabe zugrunde, einen Differential-Wirbelstromgeber zu entwickeln, bei dem durch entsprechende Ausführung des Primärumformers und entsprechende Lösung der Elemente des elektronischen Blocks die Meßgenauigkeit durch Kompensation des vom Einfluß äußerer Faktoren herrührenden Zusatzfehlers erhöht wird.

Die gestellte Aufgabe wird dadurch erreicht, daß im Differential-Wirbelstromgeber, enthaltend einen Primärumfarmer, der zur Wechselwirkung mit dem Kontrollobjekt eingerichtet ist und zwei identische Meßspulen einschließt, von denen jede eine erste und eine zweite Herausführung aufweist, wobei der letzteren davon eine Spannung zugeführt wird, und einen elektronischen Block, der mit dem genannten Primärumformer elektrisch gekoppelt ist und ein Wirkwiderstandselement, ein kapazitives Element und einen Signalverstärker umfaßt, an dessen Ausgang ein Ausgangssignal erzeugt wird, erfindungsgemäß der Primärumformer eine Zusatzspule enthält, die eine erste und eine zweite Herausführung besitzt, mit denen sie an die jeweiligen ersten Herausführungen der ersten und der zweiten Meßspule in Reihe und gleichsinnig angeschlossen ist, in dem genannten elektronischen Block das Wirkwiderstandselement ein Potentiometer darstellt, während der Signalverstärker ein Operationsverstärker ist, dessen nichtinvertierender Eingang geerdet ist, der invertierende Eingang aber über das kapazitive Element mit der mittleren Anzapfung des Potentiometers verbunden ist, dessen erste und zweite Anzapfung jeweils mit der ersten und der zweiten Herausführung der Zusatzspule und den ersten Herausführungen der Meßspulen verbunden sind, zu deren zweiten Herausführungen eine Wechselspannung in Gegenphase zugeführt wird.

Dank der beanspruchten technischen Lösung ermöglicht der Differential-Wirbelstromgeber eine Erhöhung der Meßgenauigkeit durch Kompensation der Temperaturinstabilität sowohl unter den Bedingungen des symmetrischen (gleichen) Einflusses des Kontrollobjektes auf die Meßspulen als auch beim unsymmetrischen Einfluß auf die Meßspulen und mehr noch beim Einfluß des Kontrollojektes nur auf eine Meßspule.

Die Zusatzspule befindet sich unter denselben physikalschen Bedingungen wie die Meßspulen, weshalb sich ihre Impedanz im selben Grad durch äußere Faktoren ändert. Infolge der Quotientenschaltung der Spulen ist das Ausgangssignal des Wirbelsromgebers dem Verhältnis der Impedanzen der Meßspule oder der vom Meßobjekt eingebrachten Impedanz zur Impedanz der Zusatzspule proportional, weshalb der Temperatureinfluß auf die Meßgenauigkeit in bedeutendem Maße kompensiert wird.

Es ist wichtig, daß die Impedanzwerte der ersten und der zweiten Meßspule einander gleich sind und der Impedanzwert der Zusatzspule den Impedanzwert jeder Meßspule beträchtlich übersteigt, wobei die Gütewerte der ersten und der zweiten Meßspule und der Zusatzspule bei Fehlen des Kontrollobjektes einander gleich sind.

Es ist konstruktiv vorteilhaft, daß der Wirbelstromgeber einen ersten Tragkörper enthält, auf dem die erste Meßspule, die Zusatzspule und die zweite Meßspule hintereinander und gleichachsig angeordnet sind.

Dabei ist in Abhängigkeit von den Charakteristiken der zu kontrollierenden Parameter des Objektes (Spalt, Dicke, Durchmesser, Länge, Leitfähigkeit, magnetische Permeabilität) zumindest eine genannte Meßspule dazu eingerichtet, daß in ihrer Nähe das Kontrollobjekt angeordnet wird.

In anderen Varianten kann das Kontrollobjekt in einem im ersten Tragkörper ausgeführten Axialkanal untergebracht sein.

Zur Messung der Verschiebung des Kontrollobjektes relativ zu einem gewissen feststehenden Punkt oder zur Messung der Objektlänge übersteigt dabei die Länge der Zusatzspule in axialer Richtung die Länge des Kontrollobjektes unter Berücksichtigung seiner möglichen linearen Verschiebungen innerhalb des Axialkanals des ersten Tragkörpers.

Im Falle, daß die Querabmessung des Objektes oder seine magnetischen Eigenschaften kontrolliert werden, soll die Gesamtlänge aller genannten Spulen in axialer Richtung kleiner als die Länge des Kontrollobjektes sein.

Die vorliegende Erfindung gestattet es, die Parameter von ihrer Form nach verschiedenen Objekten zu messen.

Insbesondere besteht zur Kontrolle der Wanddicke und/oder der Konzentrizität des Profils einer zylindrischen Hülle die Zusatzspule aus zwei Abschnitten, die in Reihe und gleichsinnig geschaltet sind, wobei der Differential-Wirbelstromgeber einen zweiten Tragkörper, auf dem die erste Meßspule und der erste Abschnitt der Zusatzspule gleichachsig angeordnet sind, und einen dritten Tragkörper einschließt, auf dem die zweite Meßspule und der zweite Abschnitt der Zusatzspule gleichachsig angeordnet sind, wobei die erste und die zweite Meßspule zur Unterbringung des Kontrollobjektes zwischen ihnen eingerichtet sind.

Solche Spulen können eine unterschiedliche vorgegebene Konfiguration besitzen, die der Form des Kontrollobjektes entspricht.

Für den Fall, daß sich das Kontrollobjekt außerhalb des Primärumformers befindet, soll die maximale Querabmessung der Zusatzspule eine solche sein, daß die Hälfte der genannten Abmessung geringer als der kleinste mögliche Abstand zwischen der Zusatzspule und dem Kontrollobjekt in axialer Richtung ist.

Eine solche Wahl der Querabmessung ist dadurch bedingt, daß das Kontrollobjekt einen wesentlichen Einfluß auf die Spule bis auf einen Abstand ausübt, der ihrer halben Querabmessung etwa gleich ist.

Es ist nützlich, daß die Länge der Zusatzspule in axialer Richtung die Länge des Kontrollobjektes unter Berücksichtigung seiner möglichen linearen Verschiebungen innerhalb des Axialkanals des ersten Tragkörpers übersteigt und die Gesamtlänge aller genannten Spulen in axialer Richtung kleiner als die Länge des Kontrollobjektes ist.

Es ist zweckmäßig, daß der elektronische Block ein zweites kapazitives Element enthält, das mit der mittleren Anzapfung des Potentiometers und dem Ausgang des Operationsverstärkers verbunden ist.

Durch das Vorhandensein des zweiten kapazitiven Elementes wird die Blindkomponente der Impedanz des Resonanzkreises und demnach seine Güte vergrößert.

Es ist ratsam, daß die erste und die zweite Meßspule, das erste und das zweite kapazitive Element, das Potentiometer und der Operationsverstärker solche elektrischen Daten aufweisen, bei denen die erste und die zweite Meßspule und die mit ihr verbundenen:

das Potentiometer, das erste und das zweite kapazitive Element und der Operationsverstärker einen Serienresonanzkreis mit einer Güte von 10 bis 20 bei Fehlen des Kontrollobjektes bilden.

Bei Fehlen des Kontrollobjektes wird der Meßkreis auf Resonanz mit der Erregerfrequenz abgestimmt, unter dem Einfluß des Kontrollobjektes ändert sich die Impedanz des Meßkreises und folglich die Eigenfrequenz desselben. Der hohe Gütegrad des Resonanzkreises erhöht die Empfindlichkeit des Wirbelstromgebers.

Andere Ziele und Voreile der Erfindung sind aus der nachfolgenden ausführlichen Beschreibung ersichtlich.

Nachstehend wird die Erfindung durch Beschreibung konkreter Ausführungsbeispiele derselben und anhand von Zeichnungen erläutert, in denen es zeigt

Fig. 1 ein Blockschaltbild des Differential-Wirbelstromgebers gemäß der Erfindung;
Fig. 2 die erste Variante der Anordnung des Kontrollobjektes in bezug auf den Primärumformer des Wirbelstromgebers;
Fig. 3 dasselbe wie in Fig. 2, die zweite Variante;
Fig. 4 dasselbe wie in Fig. 2, die dritte Variante;
Fig. 5 dasselbe wie in Fig. 2, die vierte Variante;
Fig. 6 dasselbe wie in Fig. 2, die fünfte Variante.

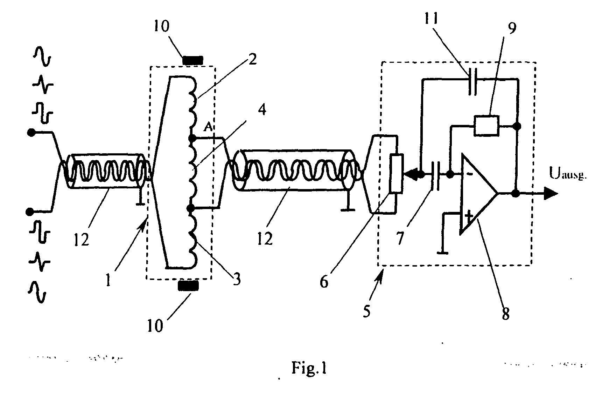

Der erfindungsgemäße Differential-Wirbelstromgeber enthält einen Primärumformer 1 (Fig. 1), der zwei identische Meßspulen 2, 3, von denen jede eine erste und eine zweite Herausführung besitzt, und eine Zusatzspule 4 umfaßt, die eine erste und eine zweite Herausführung aufweist, mit denen sie jeweils an die erste Herausführung der ersten und der zweiten Meßspule 2, 3 in Reihe und gleichsinnig angeschlossen ist und zwei gemeinsame Verbindungspunkte A, B bildet.

Der Wirbelstromgeber schließt auch einen elektronischen Block 5 ein, der mit dem erwähnten Primärumformer 1 elektrisch gekoppelt ist und der ein Potentiometer 6, ein kapazitives Element 7 und einen Operationsverstärker 8 mit Rückkopplungswiderstand 9 enthält. Die erste und zweite Anzapfung des Potentiometers 6 sind an die gemeinsamen Punkte A, B der Verbindung der Herausführungen der Meßspulen 2, 3 und der Zusatzspule 4 angeschlossen, während die mittlere Anzapfung des Potentiometers 6 an das kapazitive Element 7 angeschlossen ist, das seinerseits an den invertierenden Eingang des Operationsverstärkers 8 gelegt ist, dessen nichtinvertierender Eingang geerdet ist. Den Ausgang des elektronischen Blocks 5 bildet der Ausgang des Operationsverstärkers 8.

In der Zeichnung ist ein Kontrollobjekt 10 bedingt dargestellt, das sich in der Nähe der Spulen 2, 3 befindet.

Der hier beschriebene Wirbelstromgeber enthält weiterhin ein zweites kapazitives Element 11, das an die mittlere Anzapfung des Potentiometers 6 und den Ausgang des Operationsverstärkers 8 angeschlossen ist. Durch das Vorhandensein des zweiten kapazitiven Elementes 11 wird die Blindkomponente der Impedanz des Resonanzkreises und demnach seine Güte erhöht.

Die Speisung des Wirbelstromgebers erfolgt von einer Quelle der Wechselspannung, die den zweiten Herausführungen der Meßspulen 2, 3 in Gegenphase zugeführt wird.

Die Schaltung des Wirbelstromgebers ist so aufgebaut, daß die Zusatzspule 4 die Funktion einer Lastimpedanz für die Meßspulen 2, 3 erfüllt, wobei alle drei Impedanzen der Spulen 2, 3, 4 einen induktiv-resistenten Charakter haben und daher eine ähnliche Temperaturabhängigkeit aufweisen, was für die Gewährleistung der Temperaturstabilität der Schaltung sehr wichtig ist.Die in Reihe geschalteten Spulen 2, 3, 4 bilden einen induktiven Teiler, der von der Spannungsquelle gespeist wird. Der Vorzug einer solchen Schaltung ist, daß die Anwendung verschiedener Spannungsformen - der harmonischen Spannung, der Rechteck- und der Dreieckspannung - möglich ist, was in Fig. 1 bedingt dargestellt ist.

Die Speisung der Spulen 2, 3, 4 von der Spannungsquelle in Gegenphase erlaubt es, auf ein Koaxialkabel zu verzichten und durch einen Schirm 12 geschützte verseilte Drahtpaare zu verwenden. Um die Induktivität der Drähte auf ein Minimum zu reduzieren, werden diese verseilt, wodurch der Meßfehler vermindert werden kann, da die Drähte in Reihe mit den Meßspulen 2, 3 geschaltet sind und folglich deren Impedanz beeinflussen. Außerdem vermindert die Verseilung die Kapazität und folglich parasitäre Induzierungen; dabei wird wesentlich der Pegel von Störungen gesenkt, die beispielsweise durch Biegungen des Kabels und äußere elektromagnetische Felder bedingt sind.

Unter den Bedingungen der Serienresonanz reicht für eine effektive Abgleichung der Schaltung (insbesondere für die Kompensation der Nichtidentität der Parameter der Meßspulen 2, 3) ein einziger Wirkwiderstandselement (das Potentiometer 6) aus, weil bei der Resonanz der Ersatzwiderstand des Schwingungskreises Spule - Potentiometer - Kondensator reiner Wirkwiderstand ist.

Die Spulen 2, 3, 4 sind so ausgeführt, daß die Impedanz der Zusatzspule 4 beträchtlich größer als die Impedanz jeder Meßspule 2, 3 ist. In der Praxis ist die Impedanz der Zusatzspule um das Sieben- bis Achtfache größer als die Impedanz jeder Meßspule 2, 3. Dies ist dazu erforderlich, um den Einfluß des Kontrollobjektes 10 auf die Stromgröße in den Meßspulen 2, 3 auszuschließen, da die Zusatzspule 4 für die Meßspulen 2, 3 stromgebend ist. Die Güten aller drei Spulen 2, 4, 4 sind bei Fehlen des Meßobjektes 10 gleich.

Die Zusatzspule 4 befindet sich unter denselben physikalischen Bedingungen wie die Meßspulen 2, 3, weshalb sich ihre Impedanz etwa im selben Grad durch äußere Faktoren ändert. Infolge der Quotientenschaltung der Spulen 2, 3, 4 ist das Ausgangssignal des Wirbelsromgebers entweder dem Verhältnis der Impedanz der Meßspule 2, 3 zur Impedanz der Meßspule 4 oder dem Verhältnis der vom Meßobjekt eingebrachten Impedanz zur Impedanz der Zusatzspule proportional, weshalb der Einfluß der Temperatur auf die Meßgenauigkeit in bedeutendem Maße kompensiert wird.

Die elektrischen Daten der Meßspulen 2, 3, des Potentiometers 6, der Kondensatoren 7, 11, des Operationsverstärkers 8 sind so gewählt, daß bei Fehlen des Kontrollobjektes 10 die Meßspulen 2 und 3, der mit ihnen verbundene entsprechende Teil des Potentiometers 6, die Kondensatoren 7, 11 und der Operationsverstärker 8 einen Serienresonanzkreis mit einer Güte von 10 bis 20 bilden.

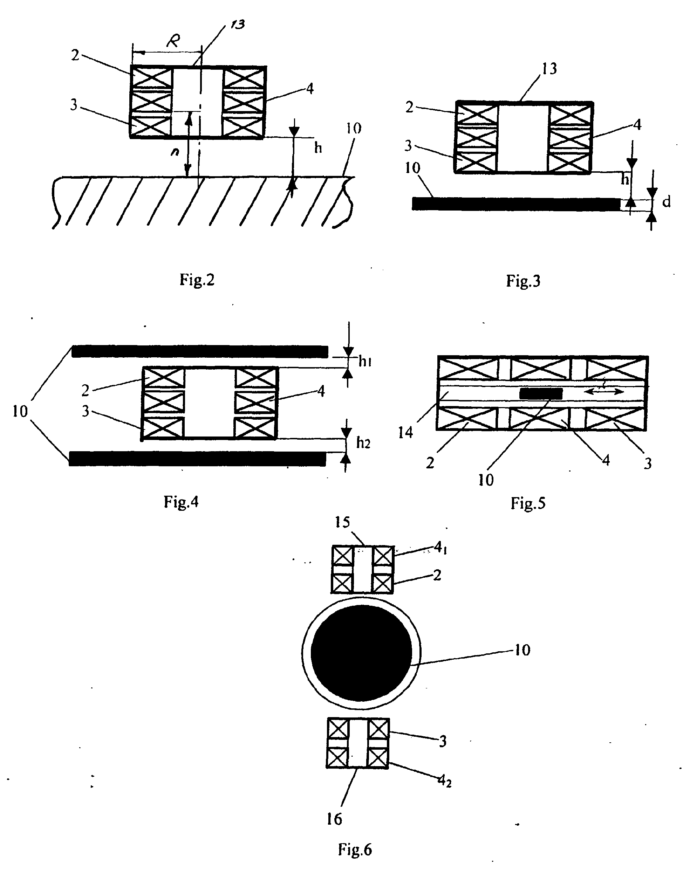

Konstruktiv ist der Wirbelstromgeber so ausgeführt, daß ein Tragkörper 13 (Fig. 2 bis 5) vorgesehen ist, auf dem die Spulen 2, 3, 4 des Primärumformers 1 hintereinander und gleichachsig in folgender Reihenfolge angeordnet sind: die erste Meßspule 2, die Zusatzspule 4 und die zweite Meß spule 3.

Dabei ist in Abhängigkeit von den Charakteristiken der zu kontrollierenden Parameter des Objektes (Spalt, Dicke, Durchmesser, Länge, Leitfähigkeit, magnetische Permeabilität) mindestens eine genannte Meßspule 2 oder 3 dazu eingerichtet, daß in ihrer Nähe das Kontrollobjekt 10 angeordnet wird.

In Fig. 2, 3 ist eine Variante der Verwendung des Wirbelstromgebers zur Messung des Abstandes h zum Kontrollobjekt 10 dargestellt. Die Variante gemäß Fig. 3 ermöglicht es auch, die Wanddicke d eines dünnwandigen Kontrollobjektes 10 zu messen.

Falls sich das Kontrollobjekt 10 außerhalb des Primärumformers 1 befindet, soll die maximale Querabmessung 2R der Zusatzspule 4 eine solche sein, daß die Hälfte der genannten Abmessung R geringer als der kleinste mögliche Abstand n zwischen der Zusatzspule 4 und dem Kontrollobjekt in axialer Richtung ist.

Eine solche Wahl der Querabmessung ist dadurch bedingt, daß das Kontrollobjekt 10 einen wesentlichen Einfluß auf die Spule 4 bis auf einen Abstand ausübt, der ihrer halben Querabmessung etwa gleich ist.

In Fig. 4 ist eine Variante der Anordnung des Primärumformers 1 innerhalb des Kontrollobjektes 4 dagestellt, wobei die Abstände $h_1$, $h_2$ zwischen den entsprechenden Meßspulen 2 und 3 und dem Kontrollobjekt 10 die zu kontrollierenden Parameter sind.

In Fig. 5 ist eine Ausführungsvariante des Wirbelstromgebers dargestellt, in dessen Tragkörper 13 ein Axialkanal 14 vorgesehen ist, in welchem das Kontrollobjekt 10 axial verschiebbar untergebracht ist. Eine solche Ausführungsform des Gebers ist in dem Fall zweckmäßig, wo die Verschiebung oder die Länge des Kontrollobjektes 10 gemessen wird, beispielsweise bei der Kontrolle eines Loses von Werkstücken, die sich durch ihre Länge in bestimmten Grenzen unterscheiden.

In diesem Fall soll die Länge der Zusatzspule 4 in axialer Richtung die Länge des Kontrollobjektes 10 unter Berücksichtigung seiner möglichen linearen Verschiebungen innerhalb des Axialkanals 14 übersteigen, mit anderen Worten soll sich das Kontrollobjekt 10 ständig in den Grenzen der Länge der Zusatzspule befinden.

Für den Fall, daß eine Querabmessung, beispielsweise der Durchmesser des Objektes 10 oder seine elektromagnetischen Eigenschaften (Leitfähigkeit, magnetische Permeabilität) kontrolliert werden, soll, um den Einfluß der möglichen Änderungen der Objektlänge auf die Meßergebnisse auszuschließen, die Gesamtlänge aller genannten Spulen 2, 4, 3 in axialer Richtung kleiner als die Länge des Kontrollobjektes 10 sein.

Im besonderen besteht zur Kontrolle der Wanddicke und/oder der Konzentrizität des Profils einer zylindrischen Hülle die Zusatzspule 4 aus zwei Abschnitten $4_1$ $4_2$, die gleichsinnig hintereinandergeschaltet sind, wobei der Differential-Wirbelstromgeber auch einen zweiten Tragkörper 15, auf dem die erste Meßspule 2 und der erste Abschnitt $4_1$ der Zusatzspule gleichachsig angeordnet sind, und einen dritten Tragkörper 16 einschließt, auf dem die zweite Meßspule 3 und der zweite Abschnitt $4_2$ der Zusatzspule gleichachsig angeordnet sind, wobei das Kontrollobjekt 10 zwischen der ersten und der zweiten Meßspule 2, 3 untergebracht ist.

Die Spulen 2, 3, 4 können nach der Integraltechnologie durch Aufdampfen einer elektrisch leitenden Schicht auf die Oberfläche des Tragkörpers 13 oder 14, 15 aus Isolierstoff mit nachfolgender Maskierung mittels Lasers hergestellt werden.

Der erfindungsgemäße Differential-Wirbelstromgeber arbeitet folgendermaßen.

Ein durch den Strom in den Spulen 2, 3, 4 erregtes elektromagnetisches Feld induziert im leitenden Kontrollobjekt 10 Wirbelströme, deren Eigenfeld wiederum die Spulen 2, 3, 4 beeinflußt. Es ist sinnvoll, diese Wechselwirkung der Spulen 2, 3, 4 und des Objektes 10 mit dem Begriff der eingebrachten (coupled) Impedanz - einer Größe, um welche sich die Impedanz jeder Meßspule unter dem Einfluß des Objektes 10 ändert, - zu kennzeichnen.

Bei Fehlen des Objektes 10 werden die beiden Schwingkreise des Gebers (Meßspule 2 oder 3 - Kondensatoren 7, 11 - Potentiometer 6 - Operationsverstärker 8) in Resonanz bezüglich der gewählten Speisefrequenz abgestimmt. Dabei ist die Höhe des Ausgangssignals nahe Null infolge der Differentialschaltung der Meßspulen 2, 3. Ein genauerer Nullwert der Ausgangsspannung wird mit Hilfe des Potentiometers 6 eingestellt, das einen gewissen Unterschied der Anfangsimpedanzen (der eigenen Impedanzen) der Meßspulen 2, 3 zu kompensieren erlaubt.

Wenn sich das Objekt 10 während der Kontrolle auf der Seite nur einer Meßspule 2 oder 3 (Fig. 2, 3), z.B. auf der Seite der ersten Spule, befindet, so dient die zweite nach wie vor zur Kompensation der eigenen (d.h. bei Fehlen des Objektes) Impedanz der ersten Spule. Dadurch wird die additive Komponente des zusätzlichen Meßfehlers kompensiert, d.h., die Temperaturänderung wirkt sich auf die Größe der Impedanzen der Meßspulen 2, 3 in gleichem Maße aus, und infolge ihrer Differentialschaltung bleibt das Ausgangssignal unveränderlich. Dabei ist sein Wert dem Größenverhältnis der Impedanz, die vom Objekt in die erste Spule 2 eingebracht wird, und der Impedanz der Zusatzspule 4 infolge der Quotientenschaltung der Spulen 2, 3, 4 proportional. Dadurch wird in bedeutendem Maße die multiplikative Komponente des Zusatzfehlers (Empfindlichkeitsfehler)•kompensiert, die durch den Einfluß der Temperatur auf die elektromagnetischen und geometrischen Kenndaten des Objektes und folglich auf die eingebrachte Impedanz bedingt ist.

Ist das Objekt 10 symmetrisch in bezug auf die Meßspulen 2, 3 angeordnet, so bleibt das Ausgangssignal des Gebers gleich Null, denn in diesem Fall werden nicht nur ihre eigenen, sondern auch die eingebrachten (gleichen) Impedanzen kompensiert. Das kommt der Kompensation der additiven Komponente des Fehlers gleich, weil sich alle Teile des Systems Geber - Objekt unter gleichen Bedingungen befinden.

Wenn aber das Objekt einen ungleichen Einfluß auf die Meßspulen 2, 3 ausübt, beispielsweise nach der Seite einer von ihnen versetzt ist (Fig. 4, 5), oder eine asymmetrische Form (Fig. 6) oder eine heterogene Struktur besitzt, so sind die eingebrachten Impedanzen der Spulen verschieden, und die Ausgangsspannung ist dem Verhältnis ihrer Differenz zur Impedanz der Zusatzspule 4 proportional. Dabei wird der multiplikative Meßfehler, der durch die Abhängigkeit der (durch die elektromagnetischen und geometrischen Kenndaten des Objektes) eingebrachten Impedanz von der Temperatur bedingt ist, in bedeutendem Maße kompensiert, während der Nullpunktfehler nach wie vor durch Subtraktion der eigenen Impedanzen der Meßspulen 2, 3 aufgrund ihrer Differentialschaltung kompensiert wird.

Bei der gegenphasigen Zuführung einer Wechselspannung mit der Amplitude U zu den Herausführungen der Meßspulen 2, 3 wird der Strom in den Spulen 2, 3, 4 durch den Ausdruck

$$ I = \frac{2U}{Z_1 + Z_2 + Z_3} \qquad (1) $$

bestimmt, worin $Z_1$, $Z_2$, $Z_3$ jeweils die Impedanzen der Meßspulen 2, 3 und der Zusatzspule 4 sind. Die Impedanz $Z_3$ der Zusatzspule 4 ist um ein beträchtliches größer als die Impedanzen der Meßspulen 2, 3, weshalb man annehmen kann, daß $Z_1 + Z_2 + Z_3 \approx Z_3$, so daß

$$I = \frac{2U}{Z_3} \qquad\qquad (2)$$

Die Spannungen in den Punkten A und B der Schaltung (Fig. 1) sind

$$U_A = U - IZ_1 = U \frac{Z_3 - 2Z_1}{Z_3} \qquad\qquad (3)$$

$$U_B = -U + IZ_2 = U \frac{2Z_2 - Z_3}{Z_3} \qquad\qquad (4)$$

Dann ist die Ausgangsspannung $U_{ausg}$ (Spannung am Ausgang des Operationsverstärkers 8):

$$U_{ausg} = k_A U_A + k_B U_B = U \left[ k_A (1 - \frac{2Z_1}{Z_3}) + k_B (\frac{2Z_2}{Z_3} - 1) \right] \qquad\qquad (5)$$

$$\kappa_B = \frac{R_{rk}}{R_H} \qquad\qquad \kappa_A = \frac{R_{rk}}{R_a}, \qquad\qquad (6)$$

worin $k_A$, $k_B$ die Übertragungsmaße an den Eingängen A und B, $R_{rk}$ den Rückkopplungswiderstand 9 des Operationsverstärkers 8, $R_A$ und $R_B$ die Widerstände der mit den Punkten A und B verbundenen Abschnitte des Potentiometers 6 bedeuten.

Die Impedanz jeder Spule 2, 3, 4 kann durch deren Güte Q ausgedrückt werden:

$$Z = R + j\omega L = R(1 + j\frac{\omega L}{R}) = R(1 + jQ) \qquad\qquad (7)$$

Die Güten aller drei Spulen 2, 3, 4 bei Fehlen des Kontrollobjektes 10 werden als gleich ausgewählt: $Q_1 = Q_2 = Q_3$, weshalb

$$\frac{Z_1}{Z_2} = \frac{R_1(1 + jQ_1)}{R_3(1 + jQ_3)} = \frac{R_1}{R_2}, \frac{Z_2}{Z_3} = \frac{R_2(1 + jQ_2)}{R_3(1 + jQ_3)} = \frac{R_2}{R_3} \qquad\qquad (8)$$

und der Ausdruck (5) nimmt die folgende Form an:

$$U_{ausg} = U \left[ k_A (1 - \frac{2R_1}{R_2}) + k_B (\frac{2R_2}{R_3} - 1) \right] \qquad\qquad (9)$$

Bei gleichen Widerständen $R_1=R_2$ ist $U_{aus}=0$, wenn $k_A=k_B$, d.h. $R_A=R_B$. Aber selbst wenn die Meßspulen 2, 3 nicht absolut identisch sind, d.h. $R_1 \neq R_2$, kann man am Ausgang derr Schaltung Null einstellen, indem man mit Hilfe des Potentiometers 6 die Widerstände $R_A$ und $R_B$ seiner Abschnitte und folglich auch die Übertragungsmaße $k_A$ und $k_B$ regelt. Dabei wird das Ausgangssignal nicht nur nach der Amplitude, sondern auch nach der Phase ein Nullsignal sein, was das Auflösungsvermögen der Schaltung erhöht.

Bei Abweichung der Temperaturbedingungen von den nominalen verändern sich die Wirkwiderstände der Spulen 2, 3, 4 gemäß dem Gesetz

$$R(t) = R_0 \left[ 1 + \alpha(t - t_0) \right] \qquad (10)$$

worin t die Temperatur des Drahts der Spule 2, 3, 4, $R_0$ den Widerstand derselben bei der Nenntemperatur $t_0$ und $\alpha$ den Widerstanstemperaturkoeffizienten bedeuten. Durch Einsetzen von (10) in (9) erhält man

$$U_{ausg} = U \left[ k_A (1 - \frac{2R_{10}}{R_{30}}) + k_B (\frac{2R_{20}}{R_{30}}) - 1) \right] \qquad (11)$$

woraus ersichtlich ist, daß bei Fehlen des Kontrollobjektes 10 das Ausgangssignal der Schaltung von der Temperaturänderung nicht abhängt.

Der Ausdruck (11) behält seine Gültigkeit auch bei symmetrischer (gleicher) Einwirkung des Kontrollobjektes 10 auf die Meßspulen 2, 3. Wenn das Kontrollobjekt 10 die Meßspulen 2, 3 verschieden beeinflußt oder nur auf eine davon einwirkt, so hat der Ausdruch für $U_{ausg}$ die Form von (5), wo die Impedanz jeder Meßspule 2, 3 als die Summe der eigenen Impedanz $Z_0$ und der eingebrachten Impedanz $\Delta Z$ dargestellt werden kann:

$$Z_1 = Z_{10} + \Delta Z_1, \qquad Z_2 = Z_{20} + \Delta Z_2, \qquad (12)$$

In der Annahme, daß $Z_{10}=Z_{20}$ und dementsprechend $k_A=k_B=k$, erhält man dann aus (5):

$$U_{ausg} = 2Uk \frac{\Delta Z_2 - \Delta Z_1}{Z_3} \qquad . \qquad (13)$$

d.h. die Ausgangspannung hängt nicht von den Anfangsimpedanzen (den eigenen Impedanzen) der Meßspulen 2, 3 ab. Das kommt der Kompensation der additiven Komponente eines Temperaturfehlers und überhaupt eines Zusatzfehlers gleich, weil sich die beiden Meßspulen 2, 3 unter gleichen physikalischen Bedingungen befinden, deren Änderung sich in gleichem Maße auf ihre Impedanzen auswirkt, ohne aber die Gleichheit $Z_{10}=Z_{20}$ zu verändern.

Das Vorhandensein der Verhältnisse $\Delta Z_1/Z_3$ und $\Delta Z_2/Z_3$ in (12) ist durch die Quotientenschaltung der Meßspulen 2, 3 und der Zusatzspule 4 bedingt. Dies bietet die Möglichkeit, auch die multiplikative Komponente des Zusatzfehlers (des Temperaturfehlers) in bedeutendem Maße zu kompensieren, weil sich alle Spulen 2, 3, 4 unter gleichen physikalischen Bedingungen befinden und die Impedanzen $\Delta Z$ und $Z_3$ einen ähnlichen aktivinduktiven Charakter haben.

Die in der Schaltung vorhandenen diffentialgeschalteten Resonanzkreise mit hoher Güte gewährleisten eine hohe Empfindlichkeit bei Änderung der Impedanzen der Meßspulen. Dabei nimmt auch die Störsicherheit der Schaltung zu, denn jeder Serienresonanzkreis erfüllt die Funktion eines Bandfilters, das die Niederfrequenzstörungen unterdrückt. Das Einschalten eines zusätzlichen Kondensators gestattet es, die Güte der Kreise zu erhöhen.

**EP 1 219 933 B1**

**Patentansprüche**

1. Differential-Wirbelstromgeber, enthaltend einen Primärumformer (1), der zur Wechselwirkung mit einem Kontrollobjekt (10) eingerichtet ist und zwei identische Meßspulen (2, 3), einschließt, von denen jede eine erste und eine zweite Herausführung aufweist, wobei den letzteren davon eine Spannung zugeführt wird, und einen elektronischen Block (5), der mit dem genannten Primärumformer (1) elektrisch gekoppelt ist und ein Wirkwiderstandselement, ein kapazitives Element (7) und einen Signalverstärker umfaßt, an dessen Ausgang ein Ausgangssignal erzeugt wird, **dadurch gekennzeichnet, daß** der Primärumformer (1) eine Zusatzspule (4) enthält, die eine erste und eine zweite Herausführung besitzt, mit denen sie an die jeweiligen ersten Herausführungen der ersten und der zweiten Meßspule (2, 3) in Reihe und gleichsinnig angeschlossen ist, in dem genannten elektronischen Block (5) das Wirkwiderstandselement ein Potentiometer (6) darstellt, während der Signalverstärker ein Operationsverstärker (8) ist, dessen nichtinvertierender Eingang geerdet ist, der invertierende Eingang aber über das kapazitive Element (7) mit der mittleren Anzapfung des Potentiometers (6) verbunden ist, dessen erste und zweite Anzapfung jeweils mit der ersten und der zweiten Herausführung der Zusatzspule (4) und den ersten Herausführungen der Meßspulen (2, 3) verbunden sind, zu deren zweiten Herausführungen eine Wechselspannung in Gegenphase zugeführt wird.

2. Differential-Wirbelstromgeber nach Anspruch 1, **dadurch gekennzeichnet, daß** die Impedanzwerte der ersten und der zweiten Meßspule (2, 3) einander gleich sind und der Impedanzwert der Zusatzspule (4) den Impedanzwert jeder Meßspule (2, 3) beträchtlich übersteigt.

3. Differential-Wirbelstromgeber nach Anspruch 1, **dadurch gekennzeichnet, daß** die Gütewerte der ersten und der zweiten Meßspule (2, 3) und der Zusatzspule (4) bei Fehlen des Kontrollobjektes (10) einander gleich sind.

4. Differential-Wirbelstromgeber nach Anspruch 1, **dadurch gekennzeichnet, daß** er einen ersten Tragkörper (13) enthält, auf dem die erste Meßspule (2), die Zusatzspule (4) und die zweite Meßspule (3) hintereinander und gleichachsig angeordnet sind.

5. Differential-Wirbelstromgeber nach Anspruch 4, **dadurch gekennzeichnet, daß** der erste Tragkörper (13) einen Axialkanal (14) aufweist, der zur Unterbringung des Kontrollobjektes (10) eingerichtet ist.

6. Differential-Wirbelstromgeber nach Anspruch 1, **dadurch gekennzeichnet, daß** die Zusatzspule (4) aus zwei Abschnitten ($4_1$, $4_2$) besteht, die gleichsinnig hintereinandergeschaltet sind, wobei der Differential-Wirbelstromgeber einen zweiten Tragkörper (15), auf dem die erste Meßspule (2) und der erste Abschnitt ($4_1$) der Zusatzspule (4) gleichachsig angeordnet sind, und einen dritten Tragkörper (16) einschließt, auf dem die zweite Meßspule (3) und der zweite Abschnitt ($4_2$ der Zusatzspule (4) gleichachsig angeordnet sind, wobei die erste und die zweite Meßspule (2, 3) zur Unterbringung des Kontrollobjektes (10) zwischen ihnen eingerichtet sind.

7. Differential-Wirbelstromgeber nach Anspruch 1, **dadurch gekennzeichnet, daß** die genannte Zusatzspule (4) durch eine maximale Querabmessung charakterisiert ist, deren Wert so gewählt ist, daß die Hälfte der genannten Abmessung geringer ist als der kleinste mögliche Abstand zwischen der Zusatzspule (4) und dem Kontrollobjekt (10) in axialer Richtung.

8. Differential-Wirbelstromgeber nach Anspruch 5, **dadurch gekennzeichnet, daß** die Länge der Zusatzspule (4) in axialer Richtung die Länge des Kontrollobjekte (10) unter Berücksichtigung seiner möglichen linearen Verschiebungen innerhalb des Axialkanals (14) des ersten Tragkörpers (13) übersteigt.

9. Differential-Wirbelstromgeber nach Anspruch 5, **dadurch gekennzeichnet, daß** die Gesamtlänge aller genannten Spulen (2, 3, 4) in axialer Richtung kleiner als die Länge des Kontrollobjektes (10) ist.

10. Differential-Wirbelstromgeber nach Anspruch 1, **dadurch gekennzeichnet, daß** er ein zweites kapazitives Element (11) enthält, das mit der mittleren Anzapfung des Potentiometers (6) und dem Ausgang des Operationsverstärkers (8) verbunden ist.

11. Differential-Wirbelstromgeber nach Anspruch 10, **dadurch gekennzeichnet, daß** die erste und die zweite Meßspule (2, 3), das erste und das zweite kapazitive Element (7, 11), das Potentiometer (6) und der Operationsverstärker (8) solche elektrischen Daten aufweisen, daß bei Fehlen des Kontrollobjektes (10) die erste und die zweite Meßspule (2, 3) und die mit ihr verbundenen: das Potentiometer (6), das erste und das zweite kapazitive Element (7, 11) und der Operationsverstärker (8) einen Serienresonanzkreis mit einer Güte von 10 bis 20 bilden.

9

**Claims**

1. A differential eddy current sensor comprising a primary transducer (1) which is set up to interact with a control object (10) and two identical measuring coils (2,3), each of which has a first and a second outlet, wherein a voltage is fed to the latter, and a electronic unit (5) which is electrically coupled to said primary transducer (1) and comprises an active resistance element, a capacitive element (7) and a signal amplifier, at the output of which an output signal is generated, **characterised in that** the primary transducer (1) includes an additional coil (4) which has a first and second outlet with which it is connected in series and equidirectionally to the respective first outlets of the first and second measuring coil (2,3), in said electronic unit (5) the active resistance element represents a potentiometer (6), whereas the signal amplifier is an operational amplifier (8) whose non-inverting input is earthed but the inverting input is connected via the capacitive element (7) to the centre tapping point of the potentiometer (6), the first and second tapping points of which are connected respectively to the first and second outlet of the additional coil (4) and the first outlets of the measuring coils (2,3), to the second outlets of which an alternating voltage is fed in phase opposition.

2. A differential eddy current sensor according to Claim 1, **characterised in that** the impedance values of the first and second measuring coil (2,3) are equal to one another and the impedance value of the additional coil (4) considerably exceeds the impedance value of each measuring coil (2,3).

3. A differential eddy current sensor according to Claim 1, **characterised in that** the quality factors of the first and second measuring coil (2,3) and the additional coil (4) are equal to one another if the control object (10) is missing.

4. A differential eddy current sensor according to Claim 1, **characterised in that** it includes a first support member (13) on which the first measuring coil (2), the additional coil (4) and the second measuring coil (3) are arranged in series and coaxially.

5. A differential eddy current sensor according to Claim 4, **characterised in that** the first support member (13) has an axial channel (14) which is provided to accommodate the control object (10).

6. A differential eddy current sensor according to Claim 1, **characterised in that** the additional coil (4) comprises two sections $(4_1, 4_2)$ which are arranged coaxially in series, wherein the differential eddy current sensor includes a second support member (15), on which the first measuring coil (2) and the first section $(4_1)$ of the additional coil (4) are arranged coaxially, and includes a third support member (16) on which the second measuring coil (3) and the second section $(4_2)$ of the additional coil (4) are arranged coaxially, wherein the first and second measuring coils (2,3) are arranged to accommodate the control object (10) between them.

7. A differential eddy current sensor according to Claim 1, **characterised in that** said additional coil (4) is **characterised by** a maximum transverse dimension whose value is chosen so that half of said dimension is smaller than the smallest possible distance between the additional coil (4) and the control object (10) in an axial direction.

8. A differential eddy current sensor according to Claim 5, **characterised in that** the length of the additional coil (4) in axial direction exceeds the length of the control object (10), taking into consideration its possible linear displacement within the axial channel (14) of the first support member (13).

9. A differential eddy current sensor according to Claim 5, **characterised in that** the total length of all said coils (2,3,4) is smaller in the axial direction than the length of the control object (10).

10. A differential eddy current sensor according to Claim 1, **characterised in that** it includes a second capacitive element (11) which is connected to the centre tapping point of the potentiometer (6) and to the output of the operational amplifier (8).

11. A differential eddy current sensor according to Claim 10, **characterised in that** the first and second measuring coil (2,3), the first and second capacitive element (7,11), the potentiometer (6) and the operational amplifier (8) have such electrical data that, if the control object (10) is missing, the first and second measuring coil (2,3) and the elements connected thereto: the potentiometer (6), the first and second capacitive element (7,11) and the operational amplifier (8) form a series resonance circuit with a quality factor of 10 to 20.

**Revendications**

1. Sonde à courant de Foucault différentielle, contenant un convertisseur primaire (1) qui est adapté pour interagir avec un objet de contrôle (10) et qui comprend deux bobines de mesure (2, 3) identiques dont chacune est pourvue d'une première et d'une seconde sorties, une tension étant appliquée aux secondes sorties, et un bloc électronique (5) qui est couplé électriquement audit convertisseur primaire (1) et comprend un élément de résistance active, un élément capacitif (7) et un amplificateur de signaux à la sortie duquel un signal de sortie est produit, *caractérisée* **en ce que** le convertisseur primaire (1) contient une bobine supplémentaire (4) qui possède une première et une seconde sorties par lesquelles elle est connectée en série et dans le même sens aux premières sorties respectives des première et seconde bobines de mesure (2, 3), l'élément de résistance active représente un potentiomètre (6) dans ledit bloc électronique (5), tandis que l'amplificateur de signaux est un amplificateur opérationnel (8) dont l'entrée non inverseuse est reliée à la terre mais dont l'entrée inverseuse est reliée, par le biais de l'élément capacitif (7), à la prise centrale du potentiomètre (6) dont la première et la seconde prises sont reliées respectivement à la première et à la seconde sorties de la bobine supplémentaire (4) et aux premières sorties des bobines de mesure (2, 3) aux secondes sorties desquelles une tension alternative en phase opposée est appliquée.

2. Sonde à courant de Foucault différentielle selon la revendication 1, *caractérisée* **en ce que** les valeurs d'impédance des première et seconde bobines de mesure (2, 3) sont égales et la valeur d'impédance de la bobine supplémentaire (4) est largement supérieure à la valeur d'impédance de chaque bobine de mesure (2, 3).

3. Sonde à courant de Foucault différentielle selon la revendication *1, caractérisée* **en ce que** les valeurs de facteur Q des première et seconde bobines de mesure (2, 3) et de la bobine supplémentaire (4) sont égales lorsque l'objet de contrôle (10) est absent.

4. Sonde à courant de Foucault différentielle selon la revendication *1, caractérisée* **en ce qu'**elle contient un premier corps de support (13) sur lequel la première bobine de mesure (2), la bobine supplémentaire (4) et la seconde bobine de mesure (3) sont disposées l'une derrière l'autre de manière coaxiale.

5. Sonde à courant de Foucault différentielle selon la revendication *4, caractérisée* **en ce que** le premier corps de support (13) est pourvu d'un canal axial (14) adapté pour loger l'objet de contrôle (10).

6. Sonde à courant de Foucault différentielle selon la revendication *1, caractérisée* **en ce que** la bobine supplémentaire (4) est formée de deux segments ($4_1$, $4_2$) montés l'un derrière l'autre dans le même sens, la sonde à courant de Foucault différentielle comprenant un second corps de support (15) sur lequel la première bobine de mesure (2) et le premier segment ($4_1$) de la bobine supplémentaire (4) sont disposés de manière coaxiale et un troisième corps de support (16) sur lequel la seconde bobine de mesure (3) et le second segment ($4_2$) de la bobine supplémentaire (4) sont disposés de manière coaxiale, la première et la seconde bobines de mesure (2, 3) étant adaptées pour loger l'objet de contrôle (10) entre elles.

7. Sonde à courant de Foucault différentielle selon la revendication *1, caractérisée* **en ce que** ladite bobine supplémentaire (4) est **caractérisée par** une dimension transversale maximale dont la valeur est choisie de manière à ce que la moitié de ladite dimension soit inférieure à la plus petite distance possible entre la bobine supplémentaire (4) et l'objet de contrôle (10) dans la direction axiale.

8. Sonde à courant de Foucault différentielle selon la revendication *5, caractérisée* **en ce que** la longueur de la bobine supplémentaire (4) dans la direction axiale est supérieure à la longueur de l'objet de contrôle (10), en tenant compte de ses éventuels déplacements linéaires à l'intérieur du canal axial (14) du premier corps de support (13).

9. Sonde à courant de Foucault différentielle selon la revendication *5, caractérisée* **en ce que** la longueur totale de toutes les bobines citées (2, 3, 4) dans la direction axiale est inférieure à la longueur de l'objet de contrôle (10).

10. Sonde à courant de Foucault différentielle selon la revendication 1, *caractérisée* **en ce qu'**elle contient un second élément capacitif (11) qui est relié à la prise centrale du potentiomètre (6) et à la sortie de l'amplificateur opérationnel (8).

11. Sonde à courant de Foucault différentielle selon la revendication 10, *caractérisée* **en ce que** la première et la seconde bobines de mesure (2, 3), le premier et le second éléments capacitifs (7, 11), le potentiomètre (6) et l'amplificateur opérationnel (8) possèdent des caractéristiques électriques telles qu'en cas d'absence de l'objet de contrôle (10), les première et seconde bobines de mesure (2, 3) et les éléments qui leur sont reliés, le potentiomètre (6), les premier et second éléments capacitifs (7, 11) et l'amplificateur opérationnel (8), forment un circuit résonant série de facteur Q compris entre 10 et 20.

Fig.1

Fig.2

Fig.3

Fig.4

Fig.5

Fig.6